# EUROPÄISCHE PATENTSCHRIFT

(11) **EP 2 553 353 B1**
(45) Veröffentlichungstag und Bekanntmachung des Hinweises auf die Patenterteilung: **10.10.2018**
(21) Anmeldenummer: 11711533.7
(22) Anmeldetag: 28.03.2011
(51) Int. Cl.: F24F 5/00, F24D 11/00

(54) **TEMPERIERSYSTEM**
TEMPERATURE-CONTROL SYSTEM
SYSTÈME D'ÉQUILIBRAGE DE LA TEMPÉRATURE

(30) Priorität: 30.03.2010 DE 102010003462
(43) Veröffentlichungstag der Anmeldung: 06.02.2013
(73) Patentinhaber: BAM Deutschland AG, 70191 Stuttgart (DE)
(72) Erfinder: SIMON, Holger, 72813 St. Johann (DE)
(74) Vertreter: Hoeger, Stellrecht & Partner Patentanwälte mbB
(86) Internationale Anmeldenummer: PCT/EP2011/054730
(87) Internationale Veröffentlichungsnummer: WO 2011/124494

(56) Entgegenhaltungen:
- DE-U1-202008 014 419
- GB-A- 2 457 879
- US-A- 2 396 338
- US-A- 3 893 506
- US-A- 4 165 036

## Beschreibung

Die Erfindung betrifft ein Temperiersystem für Objekte, insbesondere Gebäude, umfassend einen Kreislauf für ein flüssiges Wärmetransportmedium, in welchem mindestens eine intern wechselwirkende Wärmetauschereinheit und eine extern wechselwirkende Wärmetauschereinheit vorgesehen sind. Derartige Temperiersysteme sind aus dem Stand der Technik bekannt, diese werden üblicherweise dazu eingesetzt, um mit Solarenergie ein Gebäude mit oder ohne Zwischenspeicherung zu heizen oder um im Gebäude Warmwasser zu erzeugen.

US 2 396 338 offenbart ein Temperiersystem nach dem Oberbegriff des Anspruchs 1. Bei derartigen Temperiersystemen besteht das Problem, dass eine Gebäudetemperierung an heißen Tagen nicht möglich ist, da an diesen eine Kühlung des Gebäudes und keine Erwärmung des Gebäudes erfolgen sollte.
Der Erfindung liegt daher die Aufgabe zugrunde, ein Temperiersystem der gattungsgemäßen Art derart zu verbessern, dass mit diesem möglichst auch an heißen Tagen eine Gebäudetemperierung möglich ist.
Diese Aufgabe wird bei einem Temperiersystem der eingangs beschriebenen Art erfindungsgemäß dadurch gelöst, dass das Temperiersystem in einem Wärme nach außen abgebenden Kühlbetriebmodus betreibbar ist und dass die extern wechselwirkende Wärmetauschereinheit eine Abstrahlungsfläche aufweist, mit welcher in dem Kühlbetriebsmodus Wärme durch Wärmestrahlung abgebbar ist.
Der Vorteil dieser Lösung ist darin zu sehen, dass damit die Möglichkeit besteht, mit dem Temperiersystem mittels der intern wechselwirkenden Wärmetauscher Wärme aufzunehmen und durch Wärmestrahlung abzugeben. Damit besteht insgesamt die Möglichkeit, das Gebäude - gegebenenfalls über einen Zwischenspeicher - an heißen Tagen zu kühlen.

Die extern wirksame Wärmetauschereinheit ist insbesondere an einer Außenseite des Gebäudes, vorzugsweise auf dem Dach desselben vorgesehen.

Die intern wirksame Wärmetauschereinheit ist insbesondere am oder im Gebäudekörper oder in einem Speichermedium vorgesehen.

Besonders wirksam ist die Abstrahlungsfläche dann, wenn in einer Funktionsstellung der Abstrahlungsfläche die Abstrahlung im Wesentlichen in den Weltraum erfolgt.

Die Abstrahlung in den Weltraum erfolgt besonders effektiv, wenn eine Normale der Abstrahlungsfläche in den Weltraum gerichtet ist.

Insbesondere ist hierbei vorgesehen, dass ein sich um die Normale bildender Abstrahlungskegel mit einem Kegelwinkel von mindestens 100° im Wesentlichen symmetrisch zur Normalen ausgebildet ist und terrestrische Objekte nicht tangiert.

Hinsichtlich der Ausbildung der Abstrahlungsfläche zur Emission von Wärmestrahlung wurden bislang keine näheren Angaben gemacht.

So sieht eine besonders vorteilhafte Ausführungsform vor, dass die Abstrahlungsfläche bei einer Temperatur von 290 Kelvin einen hemisphärischen Gesamtemissionsgrad aufweist, der größer als 0,94 ist.

Noch besser ist es, wenn der hemisphärische Gesamtemissionsgrad größer als 0,95, vorzugsweise größer als 0,96, ist.

Um keinerlei die Wärmeabstrahlung behindernde Effekte zu erhalten, ist vorzugsweise vorgesehen, dass von der Abstrahlungsfläche emittierte Wärmestrahlung im Wesentlichen absorptionsfrei die Atmosphäre erreicht.

Das heißt, dass zwischen der Abstrahlungsfläche und der Atmosphäre keine die Wärmestrahlung in nennenswertem Maße reflektierenden Medien vorgesehen sind.
Hinsichtlich der Ausbildung der Wärmetauschereinheit wurden bislang keine näheren Angaben gemacht.

Die extern wechselwirkende Wärmetauschereinheit weist ein Wärmetauscherelement auf das mit der Abstrahlungsfläche versehen ist.
Vorzugsweise ist dabei das Wärmetauscherelement so ausgebildet, dass es von dem Wärmetransportmedium durchströmte Kanäle aufweist.
Die Abstrahlungsfläche könnte unmittelbar auf dem Wärmetauscherelement angeordnet sein.
Um den gewünschten hemisphärischen Gesamtemissionsgrad zu erreichen, ist vorzugsweise vorgesehen, dass die Abstrahlungsfläche durch eine Oberfläche einer auf dem Wärmetauscherelement angeordneten Beschichtung gebildet ist.
Eine derartige Beschichtung lässt sich dabei so anpassen, dass diese den gewünschten hemisphärischen Gesamtemissionsgrad aufweist.
Der Aufbau des Wärmetauscherelements kann dabei ebenfalls grundsätzlich beliebig sein.
Eine vorteilhafte Lösung sieht vor, dass das Wärmetauscherelement einen wärmeleitenden flächenhaft ausgedehnten Körper aufweist, der mit den Kanälen wärmeleitend gekoppelt ist.
Vorzugsweise könnten dabei die Kanäle in dem flächenhaft ausgedehnten Körper selbst vorgesehen sein.

Eine vorteilhaft herstellbare Lösung sieht vor, dass der flächenhaft ausgedehnte Körper auf einer Flachseite mit den Kanälen versehen ist.
In diesem Fall lassen sich die Kanäle in einfacher Weise dadurch realisieren, dass auf der Flachseite des flächenhaft ausgedehnten Körpers Leitungen thermisch gekoppelt mit dem flächenhaft ausgedehnten Körper angeordnet sind.
Um jedoch mit dem erfindungsgemäßen Temperiersystem nicht nur kühlen sondern gegebenenfalls auch Solarenergie aufnehmen zu können, weist die extern wechselwirkende Wärmetauschereinheit eine Solarstrahlungsabsorptionsfläche auf.

Mit einer derartigen Solarstrahlungsabsorptionsfläche besteht die Möglichkeit, die extern wechselwirkende Wärmetauschereinheit auch dazu einzusetzen, Solarstrahlung zu absorbieren, um damit wiederum das Gebäude zu heizen oder Strom zu erzeugen.
Die Solarstrahlungsabsorptionsfläche kann dabei in unterschiedlicher Weise angeordnet sein.

Eine nicht beanspruchte Lösung sieht vor, dass die Abstrahlungsfläche und die Solarstrahlungsabsorptionsfläche durch dieselbe Fläche gebildet sind.

Nach der Erfindung sind die Solarstrahlungsabsorptionsfläche und die Abstrahlungsfläche unterschiedliche Flächen der Wärmetauschereinheit.
Beispielsweise ist vorgesehen, dass die Solarstrahlungsabsorptionsfläche auf einer der Abstrahlungsfläche gegenüberliegenden Seite der Wärmetauschereinheit angeordnet ist.

Im Fall einer Solarstrahlungsabsorptionsfläche für Photovoltaik ist diese an dem die Abstrahlungsfläche tragenden Wärmetauscherelement oder separat angeordnet.

Es besteht beispielsweise aber auch die Möglichkeit, ein Wärmetauscherelement vorzusehen, das auf einer Seite die Abstrahlungsfläche und auf der gegenüberliegenden Seite die Solarstrahlungsabsorptionsfläche trägt.

Eine andere vorteilhafte Lösung sieht vor, in der Wärmetauschereinheit zwei Wärmetauscherelemente vorzusehen, wobei eines der Wärmetauscherelemente die Abstrahlungsfläche und das andere der Wärmetauscherelemente die Solarstrahlungsabsorptionsfläche trägt.

Um die Funktionsweise der Solarstrahlungsabsorptionsfläche zu optimieren, ist die Solarstrahlungsabsorptionsfläche im Heizbetriebsmodus des Temperiersystems mit einer für die Emission thermischer Wärmestrahlung der Solarstrahlungsabsorptionsfläche zumindest teilweise nicht transmissiven Abdeckung versehen.

Vorzugsweise ist dabei vorgesehen, dass die Abdeckung für Solarstrahlung transmissiv, insbesondere hochgradig transmissiv, ist, für thermische Abstrahlung der Solarstrahlungsabsorptionsfläche jedoch nicht transmissiv, ist.

Hinsichtlich der Anordnung der Abdeckung relativ zu dem Wärmetauscherelement sind dabei unterschiedliche Lösungen denkbar.

Eine vorteilhafte Lösung sieht vor, dass die Wärmetauschereinheit mit einer Abdeckvorrichtung versehen ist, mit welcher die Abdeckung auf das Wärmetauscherelement auflegbar oder von diesem abnehmbar ist.

Beispielsweise ist eine derartige Abdeckvorrichtung dann vorteilhafterweise eingesetzt, wenn dieselbe Seite des Wärmetauscherelements sowohl die Abstrahlungsfläche als auch die Solarstrahlungsabsorptionsfläche bildet.

In diesem Fall ist vorteilhafterweise dann, wenn die Abstrahlungsfläche wirksam sein soll, die Abdeckung von dem Wärmetauscherelement abgenommen, während im Fall, dass die Solarstrahlungsabsorptionsfläche wirksam sein soll, die Abdeckung auf das Wärmetauscherelement aufgelegt ist.

Eine andere vorteilhafte Lösung sieht vor, dass die Abdeckung mit dem Wärmetauscherelement verbunden ist.

Dies setzt voraus, dass die von der Abdeckung übergriffene Seite des Wärmetauscherelements nur die Solarstrahlungsabsorptionsfläche aufweist, während die Abstrahlungsfläche an einer anderen Seite der Wärmetauschereinheit angeordnet ist.

Vorzugsweise sieht eine Ausführungsform eines erfindungsgemäßen Temperiersystems vor, dass die Wärmetauschereinheit mindestens ein Energieaustauschmodul mit einer Abstrahlungsfläche sowie einer Solarstrahlungsabsorptionsfläche umfasst.

Um jeweils wechselweise die Abstrahlungsfläche oder die Solarabstrahlungsabsorptionsfläche in Funktionsstellung bringen zu können, ist vorzugsweise vorgesehen, dass das Wärmetauschermodul drehbar gelagert ist und durch einen Drehantrieb die Abstrahlungsfläche oder die Solarstrahlungsabsorptionsfläche in die Funktionsstellung bringbar ist.

Die drehbare Lagerung hat außerdem den Vorteil, dass sich mit dieser insbesondere die Solarstrahlungsabsorptionsfläche entsprechend der einfallenden Solarstrahlung optimal ausrichten lässt.

Um die Effizienz der Wärmetauscherelemente zu steigern, ist vorzugsweise vorgesehen, dass das die Abstrahlungsfläche tragende Wärmetauscherelement zumindest im Kühlbetriebsmodus auf seiner der Abstrahlungsfläche gegenüberliegenden Seite thermisch isoliert ist.

Diese thermische Isolierung lässt sich besonders einfach dadurch realisieren, dass das Wärmetauscherelement im Kühlbetriebsmodus mit seiner der Abstrahlungsfläche gegenüberliegenden Seite auf einem isolierenden Medium aufliegt.

Auch bei dem die Solarstrahlungsabsorptionsfläche tragenden Wärmetauscherelement lässt sich vorzugsweise die Effizienz dadurch steigern, dass das die Solarstrahlungsabsorptionsfläche tragende Wärmetauscherelement zumindest im Heizbetriebsmodus auf seiner der Solarstrahlungsabsorptionsfläche gegenüberliegenden Seite thermisch isoliert ist.

Auch dies lässt sich besonders einfach dadurch realisieren, dass das Wärmetauscherelement im Heizbetriebsmodus mit seiner der Solarstrahlungsabsorptionsfläche gegenüberliegenden Seite auf einem isolierenden Medium aufliegt.

Dabei kann im Falle eines Aufliegens auf einem isolierenden Medium ein permanentes Aufliegen vorgesehen sein, es ist aber auch denkbar, dass das isolierende Medium ein Isolierbett umfasst, auf dem die Wärmetauschereinheit auflegbar ist, wobei in diesem Fall die Wärmetauschereinheit jeweils so aufgelegt werden kann, dass die jeweils im Kühlbetriebsmodus die der Abstrahlungsfläche gegenüberliegenden Seite und im Heizbetriebsmodus die der Solarstrahlungsabsorptionsfläche gegenüberliegende Seite auf dem Isolierbett aufliegt.

Alternativ dazu sieht eine vorteilhafte Lösung vor, dass die Wärmetauschereinheit ein die Abstrahlungsfläche tragendes erstes Wärmetauscherelement und ein die Solarstrahlungsabsorptionsfläche tragendes zweites Wärmetauscherelement umfasst und dass zwischen dem ersten und dem zweiten Wärmetauscherelement eine Isolationsschicht angeordnet ist.

Hinsichtlich der Temperaturen des Wärmetransportmediums und der Temperaturen, bei denen die Wärmetauschereinheiten betrieben werden, wurden bislang keine Angaben gemacht.

So könnten diese auf verschiedenen Temperaturniveaus arbeiten, wobei in diesem Fall Wärmepumpen im Kreislauf vorteilhaft wären.

Eine besonders günstige und einfache Ausführungsform sieht jedoch vor, dass alle Wärmetauschereinheiten direkt von dem Wärmetransportmedium durchströmt sind und somit Wärmepumpen entfallen können.

Insbesondere sieht eine vorteilhafte Lösung vor, dass die Temperatur des Wärmetransportmediums zwischen 15°C und 30°C, noch besser zwischen 18°C und 25°C, liegt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische perspektivische Ansicht eines erfindungsgemäßen Gebäudes;
- Fig. 2: eine schematische vergrößerte Darstellung einer erfindungsgemäßen Wärmetauschereinheit gemäß einem ersten Ausführungsbeispiel;
- Fig. 3: eine Darstellung der Wärmetauschereinheit gemäß Fig. 2 im Kühlbetriebsmodus;
- Fig. 4: eine Darstellung der Wärmetauschereinheit gemäß Fig. 2 im Heizbetriebsmodus;
- Fig. 5: eine schematische Darstellung eines Strahlungsspektrums der Solarstrahlung und von der Abstrahlungsfläche abgestrahlten Strahlungsspektrums;
- Fig. 6: eine schematische Darstellung ähnlich Fig. 2 eines zweiten Ausführungsbeispiels;
- Fig. 7: einen Längsschnitt durch Wärmetauschereinheiten gemäß einem dritten Ausführungsbeispiel im Kühlbetriebsmodus;
- Fig. 8: eine Darstellung gemäß Fig. 7 im Heizbetriebsmodus;
- Fig. 9: einen Längsschnitt ähnlich Fig. 7 durch ein viertes Ausführungsbeispiel im Kühlbetriebsmodus;
- Fig. 10: eine Darstellung gemäß Fig. 9 im Heizbetriebsmodus;
- Fig. 11: eine schematische Darstellung eines fünften Ausführungsbeispiels einer erfindungsgemäßen Wärmetauschereinheit;
- Fig. 12: eine schematische Darstellung ähnlich Fig. 11 eines sechsten Ausführungsbeispiels und
- Fig. 13: eine schematische Darstellung eines siebten Ausführungsbeispiels.

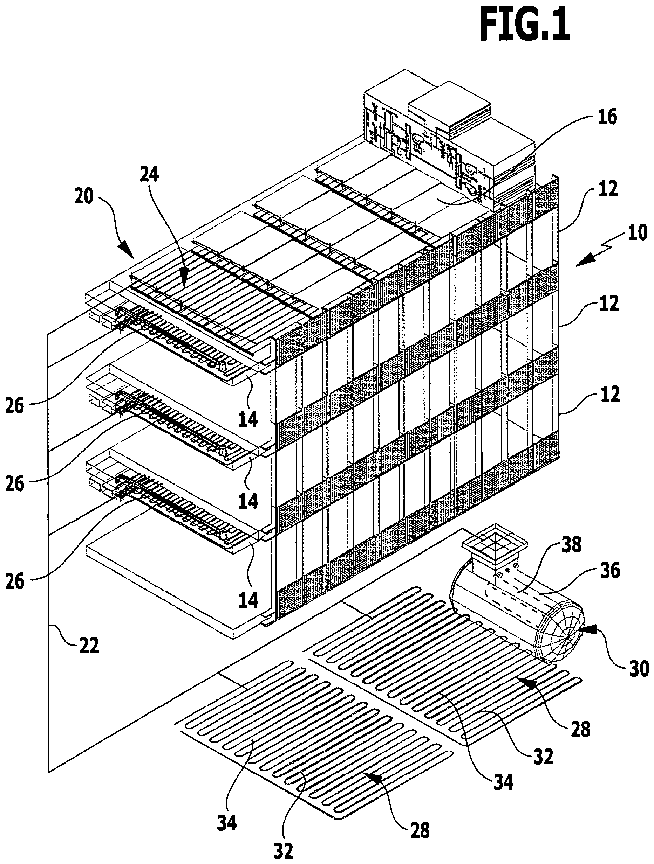

Ein in Fig. 1 als Ganzes mit 10 bezeichnetes Gebäude umfasst mehrere übereinander angeordnete Geschosse 12, die durch Geschossdecken 14 voneinander getrennt sind sowie ein Dach 16.

Dieses Gebäude 10 ist mit einem als Ganzes mit 20 bezeichneten Temperiersystem versehen, welches einen Kreislauf 22 für ein flüssiges Wärmetransportmedium aufweist, in welchem eine extern wechselwirkende Wärmetauschereinheit 24 angeordnet ist, sowie intern im Gebäude 10 mit dem Gebäudekörper wechselwirkende Wärmetauschereinheiten 26, die beispielsweise in die Geschossdecken 14 integriert sind.

Ferner sind ebenfalls noch weitere intern wechselwirkende Wärmetauschereinheiten 28 und 30 vorgesehen, beispielsweise in einem Erdwärmespeicher 32, bei denen jeweils die Wärmetauschereinheit 28 in dem diese umgebenden Erdreich 34 angeordnet ist, oder in dem Fluidwärmespeicher 36 in denen beispielsweise die Wärmetauschereinheit 30 im Fluidtank 38 angeordnet ist.

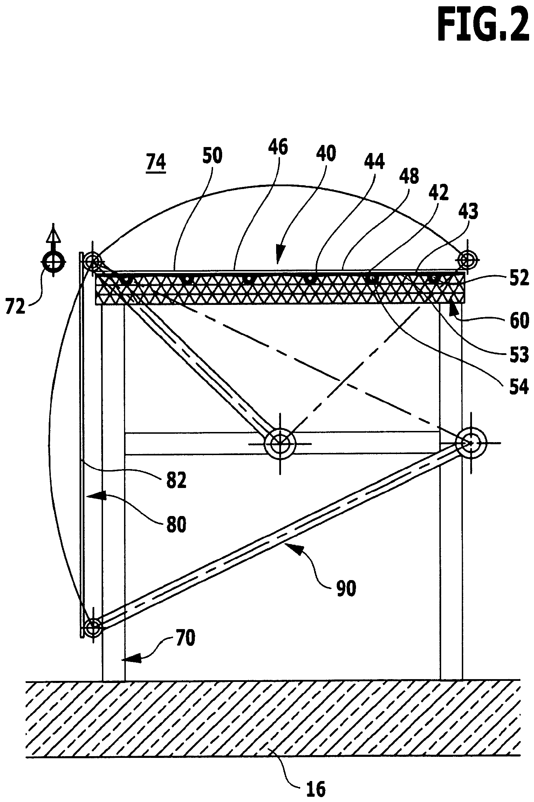

Wie in den Fig. 2 bis 4 dargestellt, umfasst gemäß einem ersten Ausführungsbeispiel eine der extern wechselwirkenden Wärmetauschereinheiten 24 ein als Ganzes mit 40 bezeichnetes Wärmetauscherelement, welches einen flächenhaft ausgedehnten Körper 42 umfasst, beispielsweise aus einem thermisch gut leitenden Material, wie Metall, wobei der Körper 42 auf einer ersten Flachseite 43 eine Beschichtung 44 trägt, die eine dem flächenhaft ausgedehnten Körper 42 abgewandte Oberseite 46 aufweist, welche eine Abstrahlungsfläche 48 sowie eine Solarstrahlungsabsorptionsfläche 50 bildet.

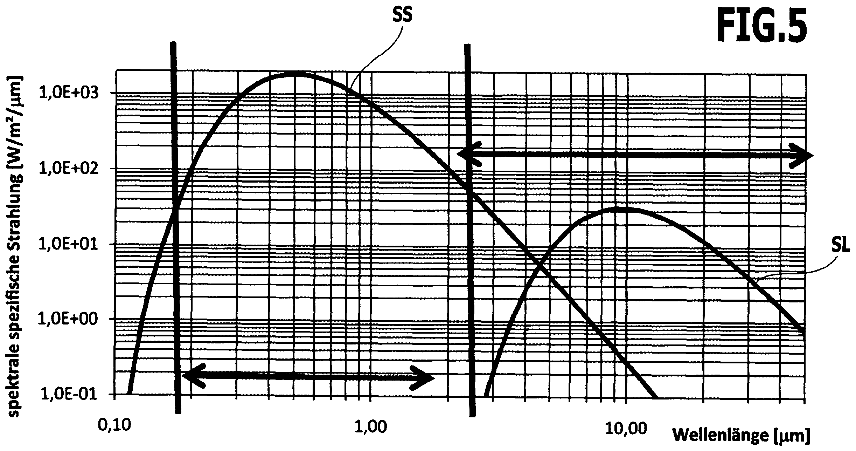

Die Tatsache, dass die Oberfläche 46 eine Abstrahlungsfläche 48 bildet, heißt, dass die Beschichtung 44 derart gewählt ist, dass die Oberfläche 46 bei einer Temperatur von 290° Kelvin Wärmestrahlung W emittiert, die ein in Fig. 5 dargestelltes Strahlungsspektrum SL eines schwarzen Strahlers bei dieser Temperatur aufweist. Ferner bedeutet die Tatsache, dass die Oberfläche 46 außerdem eine Solarstrahlungsabsorptionsfläche 50 bildet, dass die Oberfläche 46 für Solarstrahlung SS, deren Spektrum ebenfalls in Fig. 5 dargestellt ist, eine maximale Absorption aufweist.

Die Beschichtung 44 ist dabei so gewählt, dass diese bei einer Temperatur von 290° Kelvin einen hemisphärischen Gesamtemissionsgrad aufweist, der größer ist als 0,95, noch besser größer als 0,96, und außerdem einen solaren Absorptionsgrad von mindestens 0,95.

Das Wärmetauscherelement 40 ist beispielsweise auf einer der Beschichtung 44 gegenüberliegenden zweiten Flachseite 53 mit fest mit dem flächenhaft ausgedehnten Körper 42 verbundenen Leitungen 52 versehen, welche Kanäle 54 für das Wärmetransportmedium bilden, so dass das Wärmetransportmedium bei Durchströmen der Kanäle 54 thermisch an den flächenhaft ausgedehnten Körper 42 des Wärmetauscherelements 40 thermisch angekoppelt ist.

Ferner liegt das Wärmetauscherelement 40 mit seiner die Leitungen 52 tragenden zweiten Flachseite 53 mitsamt den Leitungen 52 auf einer Isolierschicht 60 auf, welche die zweite Flachseite 53 mit den Leitungen 52 thermisch gegenüber der Umgebung isoliert und somit sowohl einen Wärmeverlust an der zweiten Flachseite 53 und den Leitungen 52 oder eine Wärmeaufnahme an die Flachseite 53 oder den Leitungen 52 verhindert.

Die einzelnen Wärmetauscherelemente 40 mit der Isolierung 60 sind stationär auf dem Dach 16 des Gebäudes 10 angeordnet, beispielsweise durch eine Aufständerung 70, die an dem Dach 16 fixiert ist und die Wärmetauscherelemente 40 mit der Isolierung 60 im Abstand vom Dach 16 positioniert.

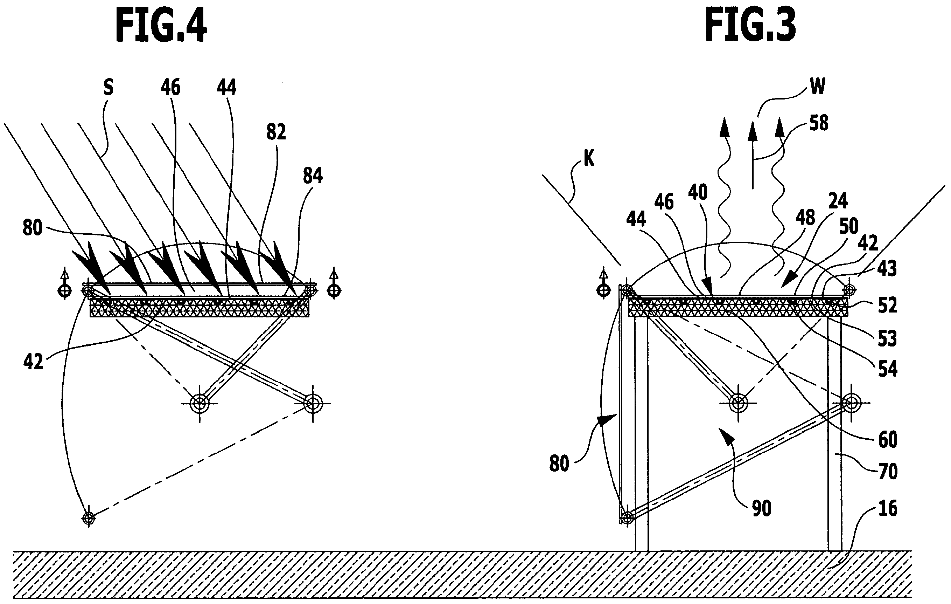

Ferner ist jedem Wärmetauscherelement 40 noch eine als Ganzes mit 80 bezeichnete Abdeckung zugeordnet, die von einer in Fig. 3 und 4 dargestellten, das Wärmetauscherelement 40 nicht abdeckenden, beispielsweise seitlich desselben angeordneten, Nichtabdeckstellung (Fig. 3) in eine in Fig. 4 dargestellte, auf dem Wärmetauscherelement 40 aufliegende und die Oberseite 46 im Abstand übergreifende Abdeckstellung bringbar ist, in welcher eine für Solarstrahlung transparente Scheibe 82 der Abdeckung 80 zwischen sich und der Oberfläche 46 einen Zwischenraum 84 einschließt, welcher durch ein gasförmiges Medium gefüllt ist und das Wärmetauscherelement 40 einerseits thermisch isoliert und andererseits verhindert, dass das Wärmetauscherelement 40 aufgrund der Abstrahlungsfläche 48 Wärme abstrahlt.

Vielmehr ist die Abdeckungsscheibe 82 so ausgebildet, dass sie, wie in Fig. 5 dargestellt, Solarstrahlung SS transmissiv durchlässt, so dass diese auf der Strahlungsabsorptionsfläche 50 absorbiert werden kann, jedoch für Wärmestrahlung W von der Oberseite 46 nicht transmissiv ist und daher Wärmeverluste des Wärmetauscherelements 40, zumindest reduziert oder eventuell verhindert.

Die Abdeckung 80 ist ferner noch über eine ein Gestänge aufweisende Abdeckungsbewegungsvorrichtung 88 an der Aufständerung 70 schwenkbar gelagert, so dass die Abdeckung 80 von der in Fig. 4 dargestellten Abdeckstellung in die in Fig. 3 dargestellte Nichtabdeckstellung - und umgekehrt - bringbar ist, in welcher die Abdeckung 80 seitlich neben dem Wärmetauscherelement 40 und der Isolierung 60 in Richtung des Dachs 16 neben der Aufständerung 70 herunterhängt und somit die Abstrahlungsfläche 48 freigibt.

Die Abstrahlungsfläche 48 dient in der Nichtabdeckstellung der Abdeckung 80 dazu, wie in Fig. 3 und Fig. 5 dargestellt, mit dem Spektrum SL eines schwarzen Strahlers bei einer Temperatur von 290° Kelvin bei nicht vorhandener Solarstrahlung SS Wärme W in den Weltraum abzustrahlen, wobei vorzugsweise eine Normale 58 auf der Oberfläche 46 von dieser weg in das Weltall gerichtet ist. Die Abstrahlung erfolgt mit einem zur Normalen 58 symmetrischen Abstrahlungskegel mit einem Öffnungswinkel von mehr als 110°, ohne dass terrestrische Objekte, wie Gebäude etc., tangiert werden.

Insbesondere erfolgt eine Abstrahlung der Wärme W von der Abstrahlungsfläche 48 bei nicht mehr vorhandener Solarstrahlung SS, das heißt insbesondere bei Nacht, in den Weltraum, wenn das Temperiersystem in einem Kühlbetriebsmodus betrieben wird.

Da die Abstrahlungsfläche 48 - wie bereits erwähnt - mit dem Spektrum SL eines schwarzen Strahlers bei 290° Kelvin abstrahlt, wird dem durch die Kanäle 54 strömenden Wärmetransportmedium durch die sich ausgehend vom Wärmetauscherelement 40 ausbreitende Wärmestrahlung W Wärme entzogen, so dass das Temperiersystem 20 im Kühlbetriebsmodus betreibbar ist, in welchem - insbesondere bei Nacht - Wärme aus dem Temperiersystem 20 abgegeben wird.

Der Abgabe von Wärme durch das Wärmetauscherelement 40 kann bei hohen Außentemperaturen ein konvektiver Wärmeeintrag in das Wärmetauscherelement entgegenwirken. Dies lässt sich dadurch verringern, dass an der Aufständerung 70 vorgesehene Zerstäuberdüsen 72 ein auf der Seite der Abstrahlungsfläche 48 angeordnetes Luftvolumen 74 durch Zerstäuben von Wasser adiabatisch kühlen und damit die Temperatur dieses Luftvolumens 74 auf Feuchtkugeltemperatur abkühlen, vorzugsweise auf eine Temperatur von maximal 21°C, abkühlen und somit einen konvektiven Wärmeeintrag in das Wärmetauscherelement 70 unterdrücken.

Die von der extern wechselwirkenden Wärmetauschereinheit 24 abgestrahlte Wärme W führt insbesondere zu einer Temperaturabsenkung des flüssigen Wärmetransportmediums in Kreislauf 22, so dass eine Kühlung der Geschossdecken 16 durch die Wärmetauschereinheiten 26 im Gebäude 10 und/oder eine Kühlung des Erdreichs 34 und/oder des Fluids im Fluidtank 36 unterhalb des Gebäudes 10 erfolgt, die verbunden ist mit einer Wärmeaufnahme aus den Geschossdecken 14 und/oder aus dem umgebenden Erdreich 34 und/oder dem umgebenden Fluid, so dass die Möglichkeit besteht, all diesen Systemen Wärme zu entziehen und somit Kälte zu speichern, die bei Tag, wenn es warm ist, zur Kühlung der Räume in den Geschossen 12 des Gebäudes 10 herangezogen werden kann.

In diesem Fall werden die Wärmetauschereinheiten 24 auf dem Dach 16 bei Solareinstrahlung stillgelegt und es erfolgt ein Wärmeaustausch zwischen den Wärmetauschereinheiten 26 in den Geschossdecken 14 und den Wärmetauschereinheiten 28 bzw. 30 in den Erdwärmespeichern 32 oder dem Fluidwärmespeicher 36.

Die Isolierung 60 dient dabei dazu, beim Abstrahlen der Wärme einen Wärmeeintrag von Seiten des Dachs 16 des Gebäudes 10 zu verhindern und somit die zweite Flachseite 53 des flächenhaft ausgedehnten Körpers 42 sowie auch die Leitungen 52 gegen einen derartigen Wärmeeintrag zu schützen.

Im Kühlbetriebsmodus liegt die Temperatur des die extern wirksame Wärmetauschereinheit durchströmenden Kühlmediums zwischen 18°C und 25°C.

Wird andererseits in einem Heizbetriebmodus in dem Temperiersystem 20 Wärme benötigt, so wird mittels der Abdeckungsbewegungsvorrichtung 88 die Abdeckung 80 von der Nichtabdeckstellung in die Abdeckstellung, dargestellt in Fig. 4, überführt. Die Abdeckungsscheibe 82 der Abdeckung 80 wirkt als Reflektor für die bei 300°Kelvin von der Oberfläche 46 abgestrahlte Wärme, während das Abdeckungsglas 82 der Abdeckung 80 Solarstrahlung SS hindurchtreten lässt, wodurch aufgrund der ebenfalls vorhandenen Solarstrahlungsabsorptionsfläche 50 eine im Wesentlichen vollständige Absorption der Solarstrahlung SS erfolgt und somit ein Aufheizen des Wärmetauscherelements 40 auf eine Temperatur von beispielsweise 300°Kelvin, so dass die in dem Wärmetauscherelement 40 vorliegende Wärme von dem Temperiersystem 20 zu den Wärmetauschereinheiten 26 oder auch den Wärmetauschereinheiten 28 und 30 transportiert und in den Wärmespeichern 32 bzw. 36 gespeichert werden kann.

Im Heizbetriebsmodus liegt die Temperatur des die extern wirksame Wärmetauschereinheit durchströmende Wärmetransportmediums zwischen 20°C und 30°C oder im Fall der sogenannten solaren Kühlung zwischen 70°C und 90°C.

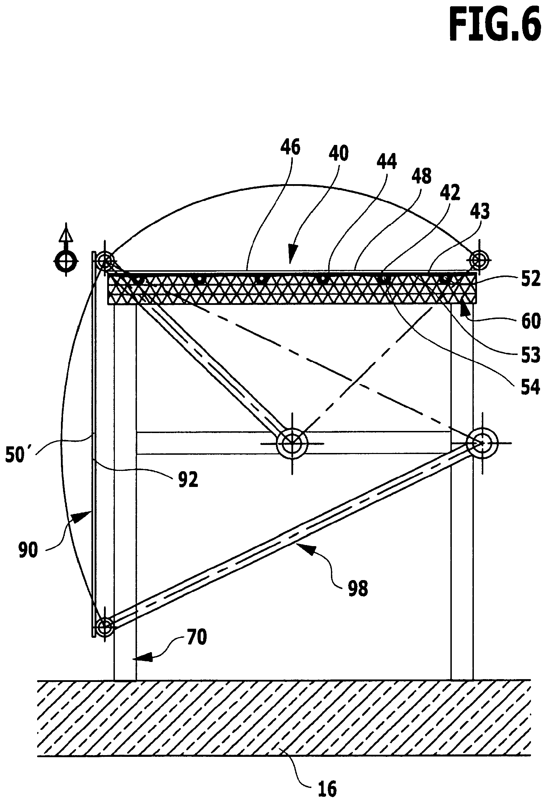

Bei einem zweiten Ausführungsbeispiel, dargestellt in Fig. 6 ist keine Beschichtung zur Bildung der Solarstrahlungsabsorptionsfläche 50 vorgesehen, sondern anstelle der Abdeckung 80 ein Photovoltaikkollektorelement 90 mit einer Solarstrahlungsabsorptionsfläche 50', die auf einem Träger 92 angeordnet ist, der mit einer analog zur Abdeckungsbewegungsvorrichtung 88 ausgebildeten Photovoltaikbewegungsvorrichtung 98 von einer inaktiven Stellung seitlich neben dem Wärmetauscherelement 40 in eine aktive Stellung bringbar ist, in welcher das Photovoltaikkollektorelement 90 das Wärmetauscherelement 40 überdeckt, um seinerseits die Solarstrahlung zu absorbieren.

Somit kann insbesondere im Sommer, wenn keine Heizung erforderlich ist, die am Tage vorhandene Solarstrahlung gewinnbringend zur Stromerzeugung genutzt werden, beispielsweise um Strom für die Umwälzung des Wärmetransportmediums zu gewinnen.

Im Übrigen ist das zweite Ausführungsbeispiel mit dem ersten Ausführungsbeispiel identisch, so dass hinsichtlich aller anderen Merkmale sowie auch der Funktion des Temperiersystems vollinhaltlich auf das erste Ausführungsbeispiel Bezug genommen wird.

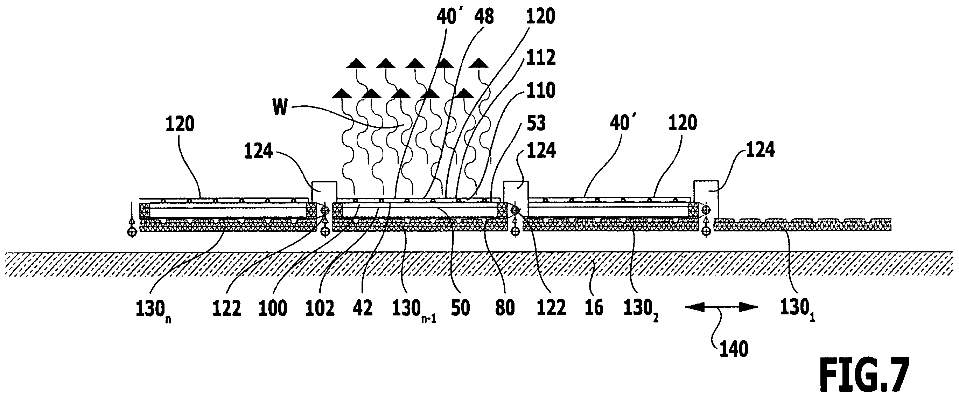

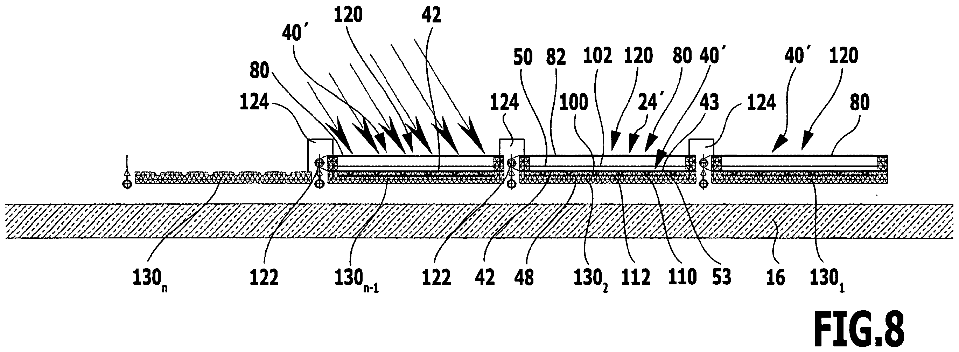

Bei einem dritten, in Fig. 7 und 8 dargestellten Ausführungsbeispiel eines erfindungsgemäßen Temperiersystems ist eine extern wechselwirkende Wärmetauschereinheit 24' vorgesehen, welche Wärmetauscherelemente 40 umfassen, die auf der ersten Flachseite 43 des flächenhaft ausgedehnten Körpers 42 eine Beschichtung 100 tragen, die mit ihrer den flächenhaft ausgedehnten Körper 42 abgewandten Oberseite 102 die Solarstrahlungsabsorptionsfläche 50 bildet, welche Solarstrahlung mit einem solaren Absorptionsgrad von mehr als 0,95 absorbiert. Die Beschichtung 100 ist beispielsweise aus einem unter der Marke CERMET vertriebenen Material hergestellt.

Ferner ist der flächenhaft ausgedehnte Körper 42 auf seiner zweiten Flachseite 53 mit einer Beschichtung 110 versehen, welche auf ihrer dem flächenhaft ausgedehnten Körper 42 abgewandten Oberseite 112 die Abstrahlungsfläche 48 bildet und dabei einen hemisphärischen Gesamtemissionsgrad von mindestens 0,95 aufweist. Dieses Material ist beispielsweise konventioneller Heizkörperlack.

Über der Oberseite 102 der Beschichtung 100 ist die Abdeckung 80 mit der Abdeckungsscheiben 82 angeordnet, welche für Solarstrahlung transmissiv ist, jedoch für von der Oberseite 102 ausgehende Wärmestrahlung bei der Temperatur der Oberseite 102 nicht transmissiv ist. Da in diesem Fall die Oberseite 102 jedoch nicht als Abstrahlungsfläche wirkt oder wirken muss, ist die Beschichtung 100 in einfacher Weise so ausführbar, dass diese bereits einen geringen hemisphärischen Gesamtemissionsgrad bei Temperaturen bis zu 400° Kelvin aufweist, so dass die Abdeckungsscheibe 82 nicht hohe Wärmeleistungen zurückreflektieren muss wie beim ersten Ausführungsbeispiel.

Ferner sind beim dritten Ausführungsbeispiel das Wärmetauscherelement 40 und die Abdeckung 80 zu einem Energieaustauschermodul 120 vereint, der um eine seitlich des Energieaustauschmoduls 120 liegende Schwenkachse 122 von einer in Fig. 8 dargestellten Solarkollektorstellung als Funktionsstellung in eine in Fig. 7 dargestellte Abstrahlungsstellung als Funktionsstellung schwenkbar ist.

Dabei ist jeder Stellung des Wärmetauschermoduls 120 ein Isolierbett 130 zugeordnet, wobei die jeder Stellung zugeordneten Isolierbetten 130 identisch ausgeführt sind, so dass das Energieaustauschmodul 120 in der Solarabsorberstellung gemäß Fig. 8 mit der Beschichtung 110 auf einem Isolierbett 130 aufliegt, während das Energieaustauschmodul 120 in der Abstrahlungsstellung gemäß Fig. 7 mit der Abdeckung 80 auf dem benachbarten Isolierbett 130 aufliegt.

Dabei ist die Achse 122, um welche das jeweilige Modul 120 schwenkbar ist, relativ zum Energieaustauschmodul 120 und relativ zu den beiden benachbarten Isolierbetten 130 so angeordnet, dass sowohl in der Solarabsorberstellung gemäß Fig. 8 als auch in der Abstrahlungsstellung gemäß Fig. 7 jeweils das Energieaustauschmodul 120 im Wesentlichen flächig auf dem entsprechenden Isolierbett 130 aufliegt und somit das Isolierbett 130 für die thermische Isolation der inaktiven Oberseite 102 oder 112 sorgt.

Bei dem dritten Ausführungsbeispiel, dargestellt in Fig. 7 und 8 besteht somit die Möglichkeit, mehrere derartige Energieaustauschmodule 120 mit parallel zueinander verlaufenden Schwenkachsen 122 in einer quer zu den Schwenkachsen 122 verlaufenden Richtung 140 so anzuordnen, dass die Zahl der in der Richtung 140 nebeneinander liegenden Isolierbetten 130 um eins höher ist als die Zahl der in der Richtung 140 nebeneinander angeordneten Energieaustauschmodule 120, wobei in diesem Fall alle Energieaustauschmodule 120 mittels ansteuerbaren Antrieben 124 gleichzeitig von ihrer Solarabsorberstellung in ihre Abstrahlungsstellung oder umgekehrt zu verschwenken sind und wobei mit Ausnahme der in Richtung 140 außenliegenden Energieaustauschmodule 120 jedes der Energieaustauschmodule 120 in der Solarabsorberstellung ein Isolierbett 130 nutzt, das in der Abstrahlungsstellung von dem nächstbenachbarten Energieaustauschmodul 120 genutzt wird.

Dies führt dazu, dass, wie beispielsweise in der Fig. 8 dargestellt, in der Solarabsorberstellung in Richtung 140 das auf der einen Seite außenliegende Isolierbett 130 nicht genutzt wird, während in der in Fig. 7 dargestellten Abstrahlungsstellung das in der Richtung 140 auf der anderen Seite außenliegende Isolierbett 130 nicht genutzt wird.

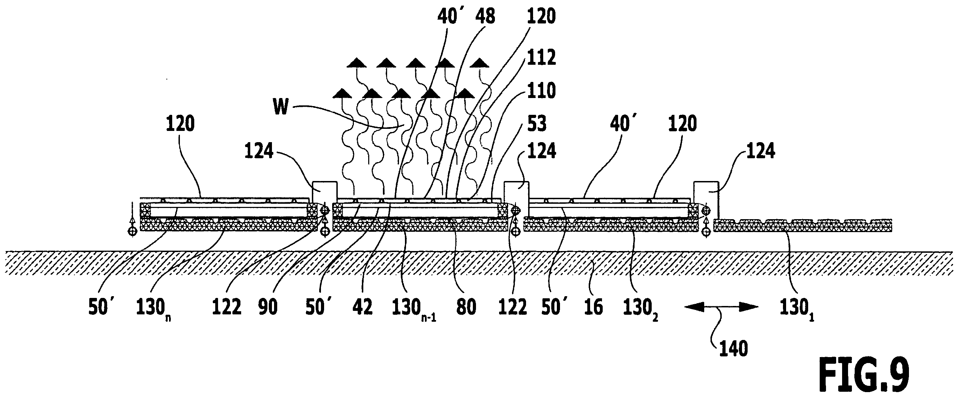

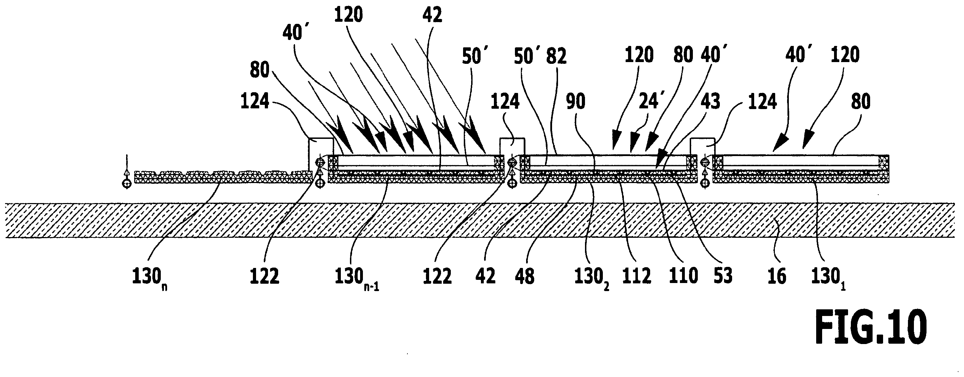

Bei einem vierten Ausführungsbeispiel, dargestellt in Fig. 9 und 10 ist auf der Flachseite 43 des flächenhaft ausgedehnten Körpers 42 anstelle der Beschichtung 100 das die Solarstrahlungsabsorptionsfläche 50' aufweisende Photovoltaikkollektorelement 90 vorgesehen, für welche der Körper 42 den Träger bildet.

Zum Schutz des Photovoltaikkollektorelement 90 kann diese noch durch die Abdeckung 80 abgedeckt sein.

Im Übrigen ist das vierte Ausführungsbeispiel in gleicher Weise ausgebildet wie das dritte Ausführungsbeispiel, so dass auf dieses vollinhaltlich Bezug genommen wird.

Im Übrigen sind diejenigen Teile des dritten und vierten Ausführungsbeispiels, die mit denen des ersten und zweiten Ausführungsbeispiels identisch sind, mit denselben Bezugszeichen versehen, so dass diesbezüglich vollinhaltlich auf die Ausführungen zum ersten Ausführungsbeispiel Bezug genommen wird.

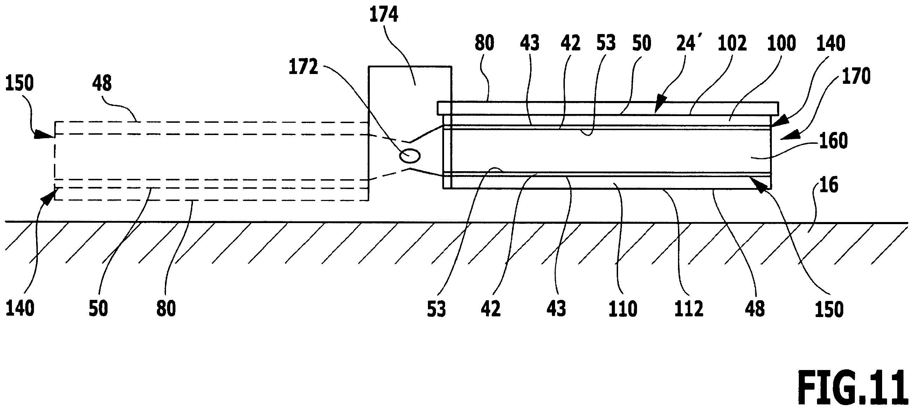

Bei einem fünften Ausführungsbeispiel eines erfindungsgemäßen Temperiersystems ist eine externe Wärmetauschereinheit 24", dargestellt in Fig. 11 vorgesehen, bei denen jeweils zwei Wärmetauscherelemente 140 und 150 einander zugeordnet sind, die durch eine Isolationsschicht 160 voneinander getrennt und gegeneinander isoliert sind.

Dabei weist das Wärmetauscherelement 140 in gleicher Weise wie beim ersten Ausführungsbeispiel den flächenhaft ausgedehnten Körper 42 auf, welcher mit seiner zweiten Flachseite 53 unmittelbar auf der Isolationsschicht 160 aufliegt und auf seiner ersten Flachseite 43 die Beschichtung 100 trägt, die auf ihrer Oberseite 102 die Solarstrahlungsabsorptionsfläche 50 mit denselben Eigenschaften wie beim dritten Ausführungsbeispiel beschrieben bildet.

Ferner weist das Wärmetauscherelement 150 ebenfalls den flächenhaft ausgedehnten Körper 42 auf, welcher ebenfalls mit seiner zweiten Flachseite 53 unmittelbar auf der Isolationsschicht 160 aufliegt, wobei dieser auf seiner ersten Flachseite 43 die Beschichtung 110 trägt, welche mit ihrer Oberseite 112 die Abstrahlungsfläche 48 mit den in Zusammenhang bereits mit dem dritten Ausführungsbeispiel beschriebenen Eigenschaften bildet.

In gleicher Weise wie beim ersten oder dritten Ausführungsbeispiel ist noch die Abdeckung 80 vorgesehen, welche die Solarstrahlungsabsorptionsfläche 50 im Abstand von dieser übergreift und mit der Abdeckungsscheibe 82 reflektierend wirkt, in gleicher Weise wie im Zusammenhang mit dem zweiten Ausführungsbeispiel beschrieben.

In diesem Fall ist ein aus den beiden Wärmetauschereinheiten 140 und 150 mitsamt der zwischen diesen liegenden Isolierschicht gebildete Energieaustauschmodul 170 ebenfalls um eine Achse 172 mittels eines Antriebs 174 verschwenkbar, und zwar einmal in eine Solarabsorptionsstellung, in welcher das Wärmetauscherelement 150 mit der Abstrahlungsfläche 48 dem Dach 16 zugewandt ist, während die Solarstrahlungsabsorptionsfläche 50 auf einer dem Dach 16 abgewandten Seite steht, wobei gegebenenfalls das Energieaustauschmodul 170 um die Schwenkachse 172 noch die Neigungsstellungen relativ zum Dach 16 positionierbar ist, um eine möglichst senkrechte Einstrahlung der Solarstrahlung SS auf die Solarstrahlungsabsorptionsfläche 50 zu erhalten.

In einer Abstrahlungsstellung, in Fig. 11 gestrichelt dargestellt, ist dann das Wärmetauscherelement 140 mit der Solarstrahlungsabsorptionsfläche 50 dem Dach 16 zugewandt, während die Abstrahlungsfläche 48 dem Weltall zugewandt ist und somit eine optimale Wärmeabstrahlung in Richtung des Weltalls erlaubt.

Bei dem fünften Ausführungsbeispiel ist allerdings jeweils das Wärmetauscherelement der beiden Wärmetauscherelemente 140 und 150 deaktiviert, welches dem Dach 16 zugewandt ist, während das auf dem Dach 16 abgewandten Seite angeordnete und in seiner Funktionsstellung stehende Wärmetauscherelement der Wärmetauscherelemente 140 und 150 aktiviert ist und durch die Isolationsschicht 160 sowohl gegen einen Wärmeaustrag als auch gegen einen Wärmeeintrag isoliert ist.

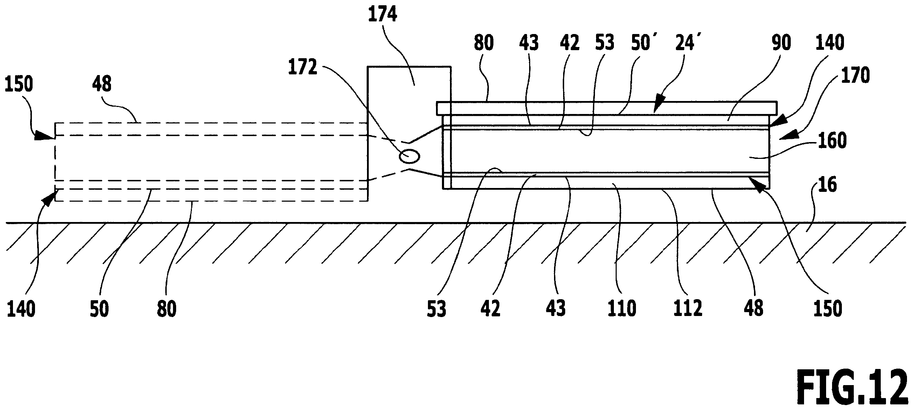

Bei einem sechsten Ausführungsbeispiel, dargestellt in Fig. 12 ist ebenfalls anstelle der Beschichtung 100 das die Solarstrahlungsabsorptionsfläche 50' aufweisendes Photovoltaikkollektorelement 90 auf dem Körper 42 angeordnet, die zu Tageszeiten die Stromerzeugung erlaubt.

Im Übrigen ist das sechste Ausführungsbeispiel in gleicher Weise aufgebaut wie das fünfte Ausführungsbeispiel, so dass auf dieses vollinhaltlich Bezug genommen werden kann.

Im Übrigen sind diejenigen Teile des fünften und sechsten Ausführungsbeispiels, die mit denen des dritten Ausführungsbeispiels identisch sind, mit denselben Bezugszeichen versehen, so dass diesbezüglich vollinhaltlich auf die Ausführungen zum ersten oder dritten Ausführungsbeispiel Bezug genommen wird.

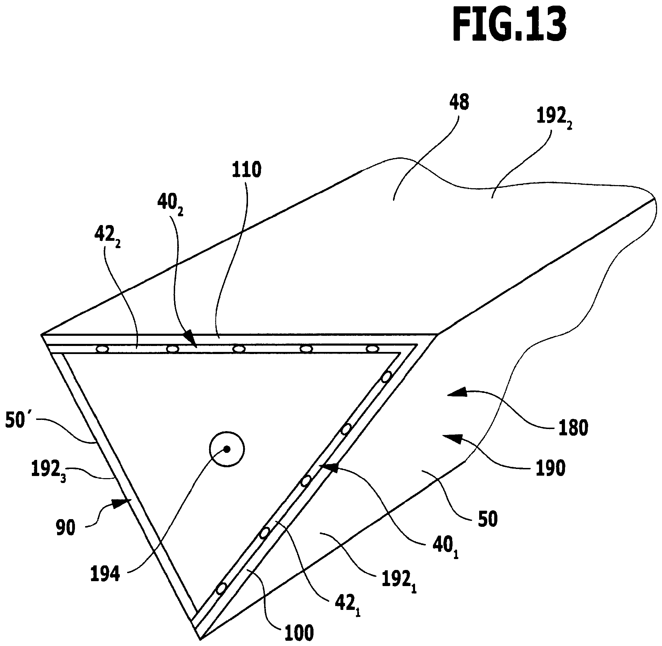

Bei einem siebten Ausführungsbeispiel, dargestellt in Fig. 13, sind in einem Energieaustauschmodul 180 zwei Wärmetauscherelemente 40₁ und 40₂ sowie das Photovoltaikkollektorelement 90 als Seitenflächen 912 eines Zylinders mit beispielsweise dreieckiger, insbesondere gleichschenkliger, Querschnittsfläche angeordnet, der seinerseits um seine Zylinderachse 194 drehbar gelagert ist.

Umfasst das Wärmetauscherelement 40₁ die Beschichtung 100, welche mit ihrer Oberseite 102 die Solarstrahlungsabsorptionsfläche 50 bildet, und das Wärmetauscherelement 40₂ die Beschichtung 110, welche mit ihrer Oberseite 112 die Abstrahlungsfläche 48 bildet, sowie Photovoltaikkollektorelement 90 die Solarstrahlungsabsorptionsfläche 50', so hat jede der Seitenflächen 192₁, 192₂ und 192₃ eine andere Funktion und je nach Ausrichtung des Wärmetauschermoduls 180 ist mindestens ein Element eines der Wärmetauscherelemente 40₁, 40₂ und des Photovoltaikkollektorelements 90 aktiv.

Das siebte Ausführungsbeispiel ermöglicht somit mittels des Energieaustauschmoduls 180 bei Nacht Wärme abzugeben und bei Tag, insbesondere bei Sonnenstrahlung, entweder mit dem Wärmetauscherelement 40₁ unmittelbar Wärme zu erzeugen oder mit dem Photovoltaikkollektorelement 90 unmittelbar Strom zu erzeugen.

Im Übrigen wird hinsichtlich der Funktion der Wärmetauscherelemente 40₁ und 40₂ und des Temperiersystems auf die Ausführungen zu den voranstehenden Ausführungsbeispielen verwiesen.

## Patentansprüche

1. Temperiersystem (20) für Gebäude, umfassend einen Kreislauf für ein flüssiges Wärmetransportmedium, in welchem mindestens eine intern wechselwirkende Wärmetauschereinheit (26, 28, 30) und eine extern wechselwirkende Wärmetauschereinheit (24) vorgesehen sind, wobei das Temperiersystem (20) in einem Wärme nach außen abgebenden Kühlbetriebsmodus betreibbar ist, wobei die extern wechselwirkende Wärmetauschereinheit (24) eine Abstrahlungsfläche (48) aufweist, mit welcher in dem Kühlbetriebsmodus Wärme durch Wärmestrahlung (W) abgebbar ist, wobei die extern wechselwirkende Wärmetauschereinheit (24) eine Solarstrahlungsabsorptionsfläche (50) aufweist, und wobei die Abstrahlungsfläche (48) und die Solarstrahlungsabsorptionsfläche (50) unterschiedliche Flächen der Wärmetauschereinheit (24) sind,
**dadurch gekennzeichnet, dass** die Solarstrahlungsabsorptionsfläche (50) im Heizbetriebsmodus mit einer die Emission thermischer Wärmestrahlung (W) der Solarstrahlungsabsorptionsfläche zumindest teilweise zurückreflektierenden Abdeckung (80) versehen ist.

2. Temperiersystem nach Anspruch 1, **dadurch gekennzeichnet, dass** in einer Funktionsstellung der Abstrahlungsfläche (48) die Abstrahlung im Wesentlichen in den Weltraum erfolgt, dass insbesondere in einer Funktionsstellung eine Normale (58) zur Abstrahlungsfläche (48) in den Weltraum gerichtet ist und dass insbesondere die Normale (58) so ausgerichtet ist, dass ein sich um die Normale bildender Abstrahlungskegel (K) mit einem Kegelwinkel mindestens 100° im Wesentlichen symmetrisch zur Normalen (58) ausgebildet ist und terrestrische Objekte nicht tangiert.

3. Temperiersystem nach einem der voranstehenden Ansprüche, **dadurch gekennzeichnet, dass** die Abstrahlungsfläche (48) bei einer Temperatur von 290 Kelvin einen hemisphärischen Gesamtemissionsgrad aufweist, der größer ist als 0,94 ist und dass insbesondere der hemisphärische Gesamtemissionsgrad größer ist als 0,95.

4. Temperiersystem nach einem der voranstehenden Ansprüche, **dadurch gekennzeichnet, dass** die extern wechselwirkende Wärmetauschereinheit (24) ein Wärmetauscherelement (40, 140, 150) aufweist, das mit der Abstrahlungsfläche (48) versehen ist, dass insbesondere das Wärmetauscherelement (40, 140, 150) von dem Wärmetransportmedium durchströmte Kanäle (54) aufweist und dass insbesondere die Abstrahlungsfläche durch eine Oberseite (46, 102, 112) einer auf dem Wärmetauscherelement (40, 140, 150) angeordneten Beschichtung (44, 100, 110) gebildet ist.

5. Temperiersystem nach Anspruch 4, **dadurch gekennzeichnet, dass** das Wärmetauscherelement (40, 140, 150) einen wärmeleitenden flächenhaft ausgedehnten Körper (42) aufweist, der mit den Kanälen (54) wärmeleitend gekoppelt ist, dass insbesondere der flächenhaft ausgedehnte Körper (42) auf einer Flachseite (53) mit den Kanälen (54) versehen ist und dass insbesondere der flächenhaft ausgedehnte Körper auf der Flachseite (53) mit einer die Kanäle (54) für das Wärmetransportmedium bildenden Leitung (52) versehen und mit dieser wärmeleitend verbunden ist.

6. Temperiersystem nach einem der voranstehenden Ansprüche, **dadurch gekennzeichnet, dass** die Solarstrahlungsabsorptionsfläche (50) auf einer der Abstrahlungsfläche (48) gegenüberliegenden Seite der Wärmetauschereinheit (24', 24") angeordnet ist.

7. Temperiersystem nach einem der voranstehenden Ansprüche, **dadurch gekennzeichnet, dass** die Wärmetauschereinheit (24) zwei Wärmetauscherelemente (140, 150) umfasst und dass eines der Wärmetauscherelemente (150) die Abstrahlungsfläche (48) und das andere der Wärmetauscherelemente (140) die Solarstrahlungsabsorptionsfläche (50) trägt.

8. Temperiersystem nach einem der voranstehenden Ansprüche, **dadurch gekennzeichnet, dass** die Abdeckung (80) für Solarstrahlung transmissiv, für thermische Abstrahlung von der Solarstrahlungsabsorptionsfläche jedoch reflektiv ist.

9. Temperiersystem nach Anspruch 8, **dadurch gekennzeichnet, dass** die Wärmetauschereinheit (24) mit einer Abdeckvorrichtung (90) versehen ist, mit welcher die Abdeckung (80) auf das Wärmetauscherelement (40) auflegbar oder von diesem abnehmbar ist und dass insbesondere die Abdeckung (80) mit dem Wärmetauscherelement (40') verbunden ist.

10. Temperiersystem nach einem der voranstehenden Ansprüche, **dadurch gekennzeichnet, dass** die Wärmetauschereinheit mindestens ein Energieaustauschmodul (120, 170) umfasst, welches eine Abstrahlungsfläche (48) sowie eine Solarstrahlungsabsorptionsfläche (50) umfasst.

11. Temperiersystem nach Anspruch 10, **dadurch gekennzeichnet, dass** das Energieaustauschmodul drehbar gelagert ist und durch einen Drehantrieb (129, 174) die Abstrahlungsfläche (48) oder die Solarstrahlungsabsorptionsfläche (50) in die Funktionsstellung bringbar ist.

12. Temperiersystem nach einem der voranstehenden Ansprüche, **dadurch gekennzeichnet, dass** das die Abstrahlungsfläche (48) tragende Wärmetauscherelement (40, 150) im Kühlbetriebsmodus auf seiner der Abstrahlungsfläche (48) gegenüberliegenden Seite thermisch isoliert ist.

13. Temperiersystem nach Anspruch 12, **dadurch gekennzeichnet, dass** das Wärmetauscherelement (40, 150) im Kühlbetriebsmodus mit seiner der Abstrahlungsfläche (48) gegenüberliegenden Seite auf einem isolierenden Medium (60, 130, 160) aufliegt.

14. Temperiersystem nach einem der voranstehenden Ansprüche, **dadurch gekennzeichnet, dass** das die Solarstrahlungsabsorptionsfläche (50) tragende Wärmetauscherelement (40, 140) im Heizbetriebsmodus auf seiner der Solarstrahlungsabsorptionsfläche (50) gegenüberliegenden Seite thermisch isoliert ist.

15. Temperiersystem nach Anspruch 14, **dadurch gekennzeichnet, dass** das Wärmetauscherelement (40, 140) im Heizbetriebsmodus mit seiner der Solarstrahlungsabsorptionsfläche (50) gegenüberliegenden Seite auf einem isolierenden Medium (60, 130, 160) aufliegt und dass insbesondere das isolierende Medium ein Isolierbett (130) umfasst, auf dem das Wärmetauscherelement (40') auflegbar ist.

16. Temperiersystem nach einem der Ansprüche 1 bis 15, **dadurch gekennzeichnet, dass** die Wärmetauschereinheit (24) ein die Abstrahlungsfläche (48) tragendes erstes Wärmetauscherelement (150) und ein die Solarstrahlungsabsorptionsfläche (50) tragendes zweites Wärmetauscherelement (140) umfasst und dass zwischen dem ersten (150) und dem zweiten Wärmetauscherelement (140) eine Isolationsschicht (160) angeordnet ist.

## Claims

1. Temperature control system (20) for buildings, comprising a circuit for a liquid heat transporting medium, in which at least one internally interactive heat exchanger unit (26, 28, 30) and an externally interactive heat exchanger unit (24) are provided, wherein the temperature control system (20) is operable in a cooling operation mode discharging heat to the outside, whereas the externally interactive heat exchanger unit (24) has a radiating surface (48) with which, in the cooling operation mode, heat is dischargeable by way of heat radiation (W), wherein the externally interactive heat exchanger unit (24) has a solar radiation absorption surface (50), and wherein the radiating surface (48) and the solar radiation absorption surface (50) are different surfaces of the heat exchanger unit (24), **characterized in that** the solar radiation absorption surface (50), in the heating operation mode, is provided with a cover (80) at least partially reflecting back the emission of thermal heat radiation (W) of the solar radiation absorption surface.

2. Temperature control system in accordance with Claim 1, **characterized in that** in a functional position of the radiating surface (48), the radiation occurs substantially into space, **in that** in particular in a functional position, a normal line (58) relative to the radiating surface (48) is directed into space, and **in that** in particular the normal line (58) is oriented such that a radiation cone (K) forming around the normal line is configured to be substantially symmetrical to the normal line (58) with a cone angle of at least 100°, and is not tangent to terrestrial objects.

3. Temperature control system in accordance with any one of the preceding Claims, **characterized in that** at a temperature of 290 Kelvin, the radiating surface (48) has a hemispherical total emissivity that is greater than 0.94, and **in that** in particular the hemispherical total emissivity is greater than 0.95.

4. Temperature control system in accordance with any one of the preceding Claims, **characterized in that** the externally interactive heat exchanger unit (24) has a heat exchanger element (40, 140, 150) that is provided with the radiating surface (48), **in that** in particular the heat exchanger element (40, 140, 150) has channels (54) through which the heat transporting medium is configured to flow, and **in that** in particular the radiating surface is formed by an upper side (46, 102, 112) of a coating (44, 100, 110) arranged on the heat exchanger element (40, 140, 150).

5. Temperature control system in accordance with Claim 4, **characterized in that** the heat exchanger element (40, 140, 150) has a heat-conducting, areally extended body (42) that is coupled to the channels (54) in a heat-conducting manner, **in that** in particular the areally extended body (42) is provided with the channels (54) on a flat side (53), and **in that** in particular the areally extended body is provided on the flat side (53) with a conduit (52) forming the channels (54) for the heat transporting medium, and is connected to said conduit (54) in a heat-conductive manner.

6. Temperature control system in accordance with any one of the preceding Claims, **characterized in that** the solar radiation absorption surface (50) is arranged on a side of the heat exchanger unit (24', 24") located opposite the radiating surface (48).

7. Temperature control system in accordance with any one of the preceding Claims, **characterized in that** the heat exchanger unit (24) comprises two heat exchanger elements (140, 150), and **in that** one of the heat exchanger elements (150) bears the radiating surface (48) and the other one of the heat exchanger elements (140) bears the solar radiation absorption surface (50).

8. Temperature control system in accordance with any one of the preceding Claims, **characterized in that** the cover (80) is transmissive for solar radiation but reflective for thermal radiation from the solar radiation absorption surface.

9. Temperature control system in accordance with Claim 8, **characterized in that** the heat exchanger unit (24) is provided with a covering device (90) with which the cover (80) is placeable on the heat exchanger element (40) or is removable therefrom, and **in that** in particular the cover (80) is connected to the heat exchanger element (40').

10. Temperature control system in accordance with any one of the preceding Claims, **characterized in that** the heat exchanger unit comprises at least one energy interchange module (120, 170) which comprises a radiating surface (48) as well as a solar radiation absorption surface (50).

11. Temperature control system in accordance with Claim 10, **characterized in that** the energy interchange module is rotatably mounted and the radiating surface (48) or the solar radiation absorption surface (50) is configured to be brought into the functional position by means of a rotary drive (129, 174).

12. Temperature control system in accordance with any one of the preceding Claims, **characterized in that** the heat exchanger element (40, 150) bearing the radiating surface (48), in the cooling operation mode, is thermally insulated on its side located opposite the radiating surface (48).

13. Temperature control system in accordance with Claim 12, **characterized in that** the heat exchanger element (40, 150), in the cooling operation mode, rests on an insulating medium (60, 130, 160) with its side located opposite the radiating surface (48).

14. Temperature control system in accordance with any one of the preceding Claims, **characterized in that** the heat exchanger element (40, 140) bearing the solar radiation absorption surface (50), in the heating operation mode, is thermally insulated on its side located opposite the solar radiation absorption surface (50).

15. Temperature control system in accordance with Claim 14, **characterized in that** the heat exchanger element (40, 140), in the heating operation mode, rests on an insulating medium (60, 130, 160) with its side located opposite the solar radiation absorption surface (50), and **in that** in particular the insulating medium comprises an insulating bed (130) on which the heat exchanger element (40') is configured to rest.

16. Temperature control system in accordance with any one of Claims 1 to 15, **characterized in that** the heat exchanger unit (24) comprises a first heat exchanger element (150) bearing the radiating surface (48), and a second heat exchanger element (140) bearing the solar radiation absorption surface (50), and **in that** an insulation layer (160) is arranged between the first (150) and the second heat exchanger element (140).

## Revendications

1. Système de contrôle de la température (20) pour bâtiments, comprenant un circuit pour un milieu caloporteur fluide, dans lequel au moins une unité d'échange de chaleur agissant intérieurement (26, 28, 30) et une unité d'échange de chaleur agissant extérieurement (24) sont prévues,
dans lequel le système de contrôle de la température (20) peut fonctionner dans un mode de fonctionnement de refroidissement diffusant de la chaleur vers l'extérieur, l'unité d'échange de chaleur agissant extérieurement (24) présente une surface rayonnante (48), avec laquelle de la chaleur est diffusable par rayonnement thermique (W) dans le mode de fonctionnement de refroidissement, que l'unité d'échange de chaleur agissant extérieurement (24) présente une surface d'absorption du rayonnement solaire (50), et la surface rayonnante (48) et la surface d'absorption du rayonnement solaire (50) sont différentes surfaces de l'unité d'échange de chaleur (24),
**caractérisé en ce**
**que** la surface d'absorption du rayonnement solaire (50) est dotée dans le mode de fonctionnement de chauffage d'un recouvrement (80) réfléchissant au moins en partie l'émission de rayonnement thermique (W) de la surface d'absorption du rayonnement solaire.

2. Système de contrôle de la température selon la revendication 1, **caractérisé en ce que** dans une position de fonctionnement de la surface rayonnante (48), le rayonnement se fait sensiblement dans l'espace, qu'en particulier dans une position de fonctionnement, une normale (58) à la surface rayonnante (48) est dirigée dans l'espace et qu'en particulier la normale (58) est orientée de sorte qu'un cône rayonnant (K) formé autour de la normale est réalisé avec un angle de cône d'au moins 100° de manière sensiblement symétrique à la normale (58) et n'est pas tangent à des objets terrestres.

3. Système de contrôle de la température selon l'une quelconque des revendications précédentes, **caractérisé en ce que** la surface rayonnante (48) présente à une température de 290 Kelvin, une émissivité totale hémisphérique, qui est supérieure à 0,94 et qu'en particulier l'émissivité totale hémisphérique est supérieure à 0,95.

4. Système de contrôle de la température selon l'une quelconque des revendications précédentes, **caractérisé en ce que** l'unité d'échange de chaleur agissant extérieurement (24) présente un élément d'échange de chaleur (40, 140, 150), qui est doté de la surface rayonnante (48), qu'en particulier l'élément d'échange de chaleur (40, 140, 150) présente des canaux (54) traversés par le milieu caloporteur et qu'en particulier la surface rayonnante est formée par une face supérieure (46, 102, 112) d'un revêtement (44, 100, 110) agencé sur l'élément d'échange de chaleur (40, 140, 150).

5. Système de contrôle de la température selon la revendication 4, **caractérisé en ce que** l'élément d'échange de chaleur (40, 140, 150) présente un corps thermoconducteur s'étendant de manière surfacique (42), qui est couplé aux canaux (54) de manière thermoconductrice, qu'en particulier le corps s'étendant de manière surfacique (42) est doté sur un côté plat (53) de canaux (54) et qu'en particulier le corps s'étendant de manière surfacique est doté sur le côté plat (53) d'une conduite (52) formant les canaux (54) pour le milieu caloporteur et est relié à celle-ci de manière thermoconductrice.

6. Système de contrôle de la température selon l'une quelconque des revendications précédentes, **caractérisé en ce que** la surface d'absorption du rayonnement solaire (50) est agencée sur un côté de l'unité d'échange de chaleur (24', 24"") opposé à la surface rayonnante (48).

7. Système de contrôle de la température selon l'une quelconque des revendications précédentes, **caractérisé en ce que** l'unité d'échange de chaleur (24) comprend deux éléments d'échange de chaleur (140, 150) et qu'un des éléments d'échange de chaleur (150) porte la surface rayonnante (48) et l'autre des éléments d'échange de chaleur (140), la surface d'absorption du rayonnement solaire (50) .

8. Système de contrôle de la température selon l'une quelconque des revendications précédentes, **caractérisé en ce que** le recouvrement (80) est transmissif pour le rayonnement solaire, mais réflectif pour le rayonnement thermique de la surface d'absorption du rayonnement solaire.

9. Système de contrôle de la température selon la revendication 8, **caractérisé en ce que** l'unité d'échange de chaleur (24) est dotée d'un dispositif de recouvrement (90), avec lequel le recouvrement (80) est posable sur l'élément d'échange de chaleur (40) ou retirable de celui-ci et qu'en particulier le recouvrement (80) est relié à l'élément d'échange de chaleur (40').

10. Système de contrôle de la température selon l'une quelconque des revendications précédentes, **caractérisé en ce que** l'unité d'échange de chaleur comprend au moins un module d'échange d'énergie (120, 170), qui comprend une surface rayonnante (48) ainsi qu'une surface d'absorption du rayonnement solaire (50).

11. Système de contrôle de la température selon la revendication 10, **caractérisé en ce que** le module d'échange d'énergie est monté en rotation et la surface rayonnante (48) ou la surface d'absorption du rayonnement solaire (50) peut être amenée dans la position de fonctionnement par un entraînement rotatif (129, 174).

12. Système de contrôle de la température selon l'une quelconque des revendications précédentes, **caractérisé en ce que** l'élément d'échange de chaleur (40, 150) portant la surface rayonnante (48) est isolé thermiquement dans le mode de fonctionnement de refroidissement sur son côté opposé à la surface rayonnante (48).

13. Système de contrôle de la température selon la revendication 12, **caractérisé en ce que** l'élément d'échange de chaleur (40, 150) repose dans le mode de fonctionnement de refroidissement avec son côté opposé à la surface rayonnante (48) sur un milieu isolant (60, 130, 160).

14. Système de contrôle de la température selon l'une quelconque des revendications précédentes, **caractérisé en ce que** l'élément d'échange de chaleur (40, 140) portant la surface d'absorption du rayonnement solaire (50) est isolé thermiquement dans le mode de fonctionnement de chauffage sur son côté opposé à la surface d'absorption du rayonnement solaire (50).

15. Système de contrôle de la température selon la revendication 14, **caractérisé en ce que** l'élément d'échange de chaleur (40, 140) repose dans le mode de fonctionnement de chauffage avec son côté opposé à la surface d'absorption du rayonnement solaire (50) sur un milieu isolant (60, 130, 160) et qu'en particulier le milieu isolant comprend un lit isolant (130), sur lequel l'élément d'échange de chaleur (40') est posable.

16. Système de contrôle de la température selon l'une quelconque des revendications 1 à 15, **caractérisé en ce que** l'unité d'échange de chaleur (24) comprend un premier élément d'échange de chaleur (150) portant la surface rayonnante (48) et un deuxième élément d'échange de chaleur (140) portant la surface d'absorption du rayonnement solaire (50) et qu'une couche isolante (160) est agencée entre le premier (150) et le deuxième élément d'échange de chaleur (140).
